# EUROPEAN PATENT APPLICATION

(11) **EP 2 210 702 A1**
(43) Date of publication of application: **28.07.2010**
(21) Application number: 10151582.3
(22) Date of filing: 25.01.2010
(51) Int. Cl.: B23Q 7/04

(54) **Aggregate for electrospindles**

(30) Priority: 26.01.2009 IT BO20090036
(71) Applicant: BIESSE S.p.A., 61100 Pesaro (IT)
(72) Inventor: Bernardi, Paolo, 47841 Cattolica (IT)
(74) Representative: Jorio, Paolo

(57) **Abstract**

An aggregate for electrospindles is provided with a coupling shaft (2) which may be engaged to an electrospindle outlet shaft, and with a gripping element (10; 24; 40) and/or a screwing element (31).

## Description

The present invention relates to an aggregate for electrospindles.

The present invention is particularly advantageously applied to aggregates for machining components made of wood or the like, to which explicit reference will be made in the following description without therefore loosing in generality.

In the field of production of components made of wood or the like, it is known to provide a machine of the type comprising, for example, an elongated base provided with two longitudinal guiding elements parallel to a substantially horizontal first direction; a plurality of cross elements mounted between the longitudinal guiding elements parallelly to a substantially horizontal second direction which is transversal to the first direction; at least one clamping vice mounted to each cross element to lock at least one component; and a bridge crane, which extends over the base in the second direction, is provided with at least one operating head, and is movable along the base in the first direction.

As the components are normally inserted into the clamping vices and taken from the clamping vices by a specific gripping and conveying device mounted to the bridge crane or by the side of the base, the known machines of the above-described type are relatively complex, large in size and expensive.

It is an object of the present invention to provide an aggregate for electrospindles which is simple and cost-effective to be implemented and which avoids the use of the above-mentioned gripping and conveying device.

According to the present invention, an aggregate for electrospindles is provided as claimed in the appended claims.

The present invention will now be described with reference to the accompanying drawings, which illustrate a non-limitative embodiment thereof, in which:
figure 1 is a schematic perspective view of a preferred embodiment of the aggregate of the present invention;
figure 2 is a schematic side view, with parts in section for clarity, of the aggregate in figure 1;
figure 3 is a schematic perspective view of a first variant of the aggregate in figures 1 and 2;
figure 4 is a schematic side view, with parts in section for clarity, of the variant in figure 3;
figure 5 is a schematic perspective view of a second variant of the aggregate in figures 1 and 2;
figure 6 is a schematic perspective view of a third variant of the aggregate in figures 1 and 2; and
figure 7 is a schematic side view, with parts in section for clarity, of the variant in figure 6.

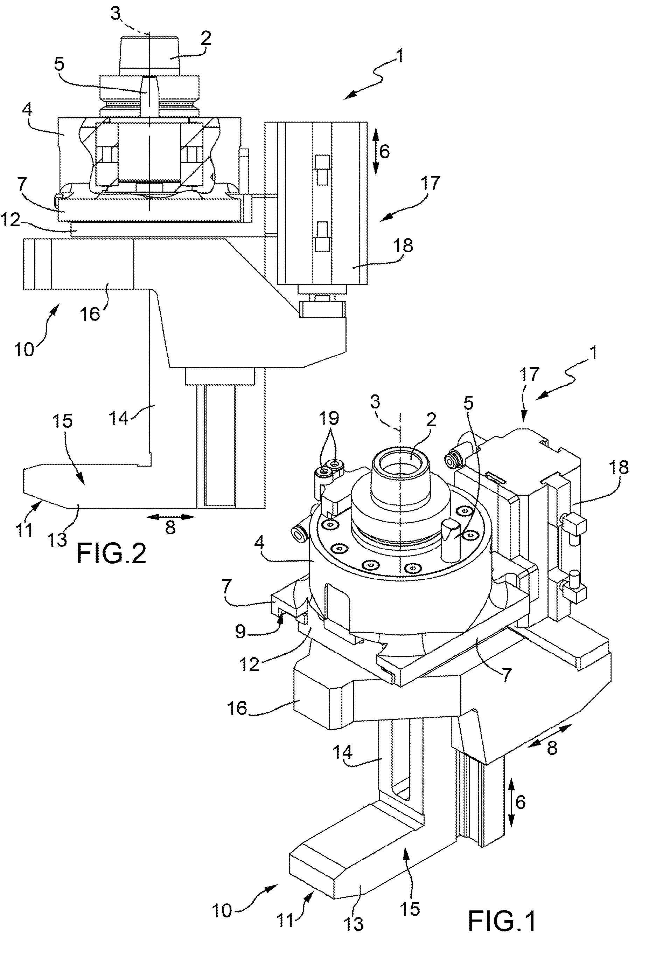

With reference to figures 1 and 2, numeral 1 indicates as a whole an aggregate for electrospindles comprising a inlet shaft 2, which has a substantially vertical longitudinal axis 3, and which may be engaged in an angularly fixed manner to an outlet shaft (not shown) of an electrospindle (not shown) mounted in an operating head (not shown) of a machine (not shown) for machining components (not shown) made of wood or the like.

Shaft 2 is rotatably coupled through a substantially tubular supporting frame 4, which extends about the axis 3, and is provided with a coupling pin 5, which protrudes upwards from the frame 4 in a vertical direction 6 parallel to axis 3, and allows to couple the frame 4 to an actuating motor (not shown) generally carried by the electrospindle (not shown) and adapted to move frame 4 about the axis 3 itself.

Frame 4 has two lower arms 7, which extend in a horizontal direction 8 transversal to direction 6, are arranged on opposite sides of axis 3, and define a guide 9 adapted to support a gripping element 10 for at least one component (not shown) of wood or the like.

Element 10 comprises a slide 11 which is C-shaped, comprises in turn an upper plate 12 and a lower plate 13 substantially connected to each other by a vertical upright 14, substantially parallel to direction 6, and is slidingly coupled to guide 9 by means of the plate 12 to carry out rectilinear movements in direction 8 with respect to frame 4 under the bias of an elastic shock absorbing device (not shown) interposed between frame 4 and slide 11.

Plate 13 and upright 14 define a lower jaw 15 of element 10, which further comprises an upper jaw 16, which extends about the upright 14, and is slidably coupled to the upright 14 to carry out rectilinear movements in direction 6 with respect to the jaw 15 and under the thrust of an actuating device 17 between a locking position and a release position of the mentioned component (not shown).

Device 17 comprises a pneumatic actuating cylinder 18, which is fixed to slide 11, extends in direction 6, and is fed by means of two pneumatic feeding lines 19 carried by the frame 4 and adapted to be connected to a pneumatic feeding circuit (not shown) carried by the electrospindle (not shown).

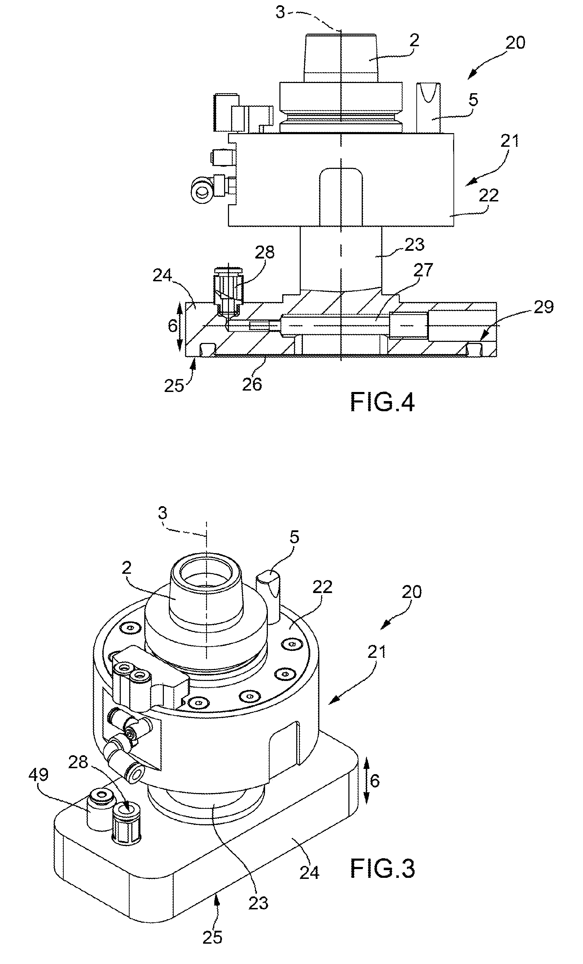

The variant shown in figures 3 and 4 relates to an aggregate 20 which differs from aggregate 1 in that the frame 4 is suppressed therein and replaced by a frame 21 comprising a flared upper portion 22 extending about the shaft 2 and a lower narrow portion 23, which protrudes downwards from portion 22 coaxially to axis 3, and carries a gripping plate 24 of substantially rectangular shape connected to a free end thereof.

Plate 24 is limited at the bottom by a face 25 substantially orthogonal to axis 3, and is provided with a recess 26 which extends about the axis 3, opens outwards at the face 25, and is connected to an intermediate point of a pneumatic pipe 27 obtained through the plate 24 itself.

Pipe 27 extends between an inlet 28 connected to a pneumatic compressed air device (not shown) and an outlet 29 connected to the external environment, to generate a suction flow in the recess 26 adapted to allow plate 24 to hold at least one component to be machined (not shown) by means of Venturi effect.

Plate 24 is further provided with a further pneumatic pipe 49 for feeding a compressed air flow to the recess 26, adapted to facilitate the release of the component (not shown) from the plate 24 itself.

With this regard, it is worth noting that the angular position of gripping element 10 and gripping plate 24 about axis 3 is selectively controlled by moving the corresponding frames 4 and 21, respectively, about the axis 3 itself under the thrust of the aforesaid actuating motor (not shown) carried by the electrospindle (not shown).

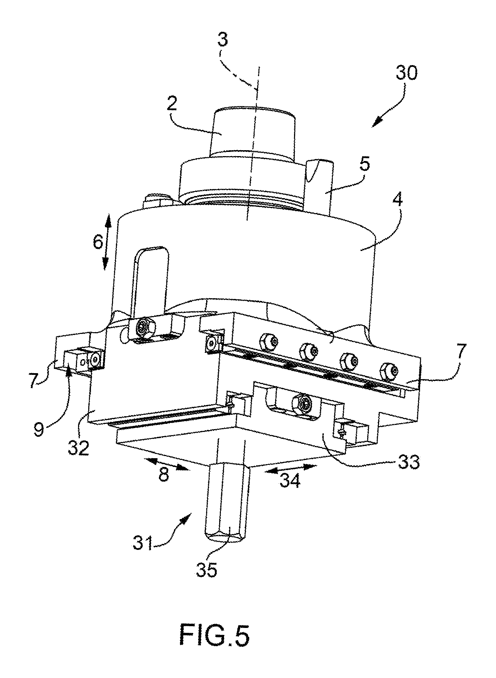

The variant shown in figure 5 relates to an aggregate 30 which differs from aggregate 1 in that the gripping element 10 is suppressed therein and replaced by a screwing element 31, comprising a first slide 32 slidably coupled to the guide 9 to carry out rectilinear movements with respect to frame 4 in direction 8 under the bias of a shock absorbing device (not shown) interposed between frame 4 and slide 32, and a second slide 33 slidably coupled to the slide 32 to carry out rectilinear movements with respect to the slide 32 itself in a horizontal direction 34 orthogonal to directions 6 and 8 under the bias of an elastic shock absorbing device (not shown) interposed between the slides 32 and 33.

Slide 33 supports a screwing tool 35 which protrudes downwards from the slide 33 in direction 6, is coaxial with axis 3, and is rotatably carried about the axis 3 itself of the frame 4 under the thrust of the aforesaid actuating motor (not shown) carried by the electrospindle (not shown).

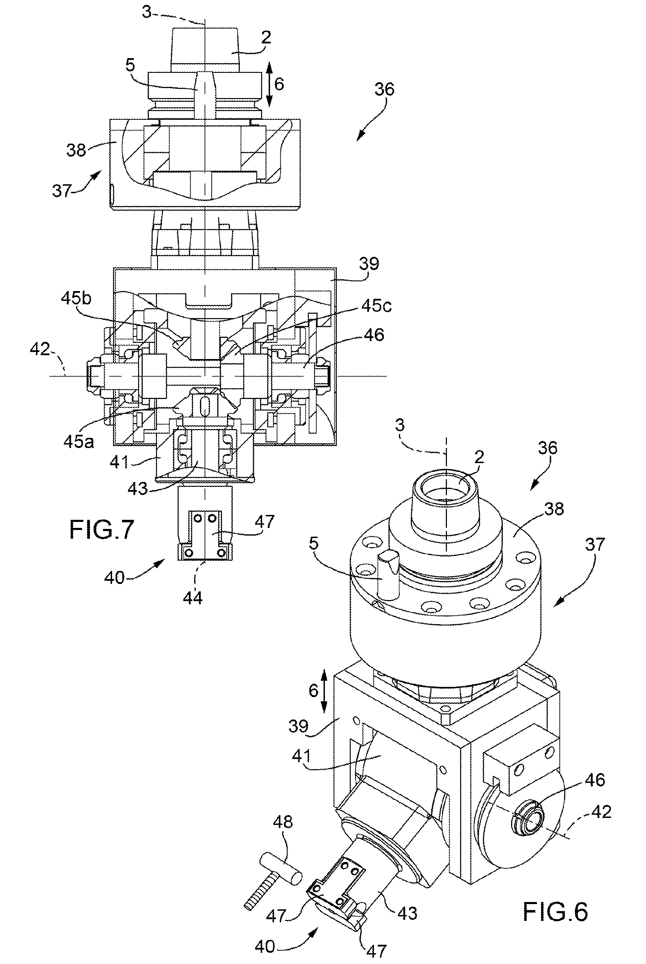

The variant shown in figures 6 and 7 relates to an aggregate 36 which differs from aggregate 1 in that the frame 4 is suppressed therein and replaced by a frame 37 comprising an upper portion 38 extending about the axis 3, and a lower portion which protrudes downwards from the portion 38 in direction 6, and has the shape of a fork 39.

Fork 39 supports a gripping element 40 comprising a sleeve 41 which has a longitudinal horizontal axis 42 orthogonal to axis 3, extends between the two arms of fork 39, is rotatably coupled to the fork 39 to rotate about axis 42, either manually or under the thrust of an actuating device (known and not shown), and cooperates with a locking device (not shown) adapted to lock the sleeve 41 in a given angular position about the axis 42 itself.

Sleeve 41 is rotatably engaged by an outlet shaft 43, which has a longitudinal axis 44 orthogonal to axis 42, radially protrudes outwards from the sleeve 41, and is coupled to shaft 2 via a bevel gear transmission comprising a first gear 45a keyed onto the shaft 43, a second gear 45b keyed onto the shaft 2, and a third gear 45c keyed onto an intermediate shaft 46 rotatably engaged through the sleeve 41 coaxially to axis 42.

At a free end, the shaft 43 supports a pair of elastically deformable jaws 47 which are parallel to axis 44, are arranged on opposite sides of axis 44, and are mobile between a locking position and a release position of a hinge 48 of anuba type upon the insertion of hinge 48 between the jaws 47 and the extraction of hinge 48 from the jaws 47.

In use, hinge 48 is firstly either manually inserted between the jaws 47 or automatically taken by the aggregate 36, and then screwed into a corresponding component (not shown) upon the rotation of the shafts 2, 46, and 43, and is finally released from the jaws 47.

The position of shaft 43 about axis 44 is selectively controlled either by controlling the position of the outlet shaft (not shown) of the electrospindle (not shown) or by controlling the position, e.g. of the shaft 46 with a control device (not shown) preferably connected by means of a wireless connection to an electronic control unit (not shown).

The aggregates 1 and 20 thus allow to take and transfer the components (not shown) to be machined in a simple and cost-effective manner, avoiding the use of gripping and conveying devices specifically designed and combined to the machine (not shown) for machining the components (not shown).

## Claims

1. Aggregate for electrospindles, the aggregate comprising a coupling shaft (2) which has a first longitudinal axis (3) and can be engaged to an electrospindle outlet shaft; and being **characterized in that** it further comprises a gripping element (10; 24; 40) and/or a screwing element (31).

2. Aggregate according to Claim 1, further comprising a tubular supporting frame (4; 21; 37) which extends around the coupling shaft (2), and is rotatably coupled to the coupling shaft (2) to rotate around the first axis (3).

3. Aggregate according to Claim 2, wherein the gripping element (10; 24; 40) and the screwing element (31) are mounted to rotate around the first axis (3) under the thrust of said supporting frame (4; 1; 37).

4. Aggregate according to Claim 2, wherein the gripping element (10; 24; 40) and the screwing element (31) are mounted to rotate around respective second longitudinal axes (3; 44) under the thrust of said coupling shaft (2).

5. Aggregate according to any one of Claims 2-4, wherein the gripping element (10) comprises a lower jaw (15) and an upper jaw (16), mutually mobile between a locking position and a release position of at least one component to be processed.

6. Aggregate according to Claim 5, wherein the lower jaw (15) is slidably coupled to the supporting frame (4) to move, with regard to the supporting frame (4), in a first direction (8) substantially transversal to the first axis (3); a shock absorbing device being interposed between the lower jaw (15) and the supporting frame (4) to control the movements of the lower jaw (15) in the first direction (8).

7. Aggregate according to Claim 5 or 6, further comprising a pneumatic actuating cylinder (18) to move the upper jaw (16) between said locking and release positions; the pneumatic actuating cylinder (18) having two inlets (19) connectable to a pneumatic feeding device supported by the electrospindle.

8. Aggregate according to any one of Claims 2-4, wherein the gripping element (24) comprises a gripping plate (24) which is supported by the supporting frame (21) and has a recess (26) formed on its lower face (25) to be connected to a pneumatic suction device (27) for gripping at least a component to be processed.

9. Aggregate according to Claim 8, wherein the recess (26) is further connectable to a compressed-air pneumatic device to ease the release of said component.

10. Aggregate according to any one of Claims 2-4, further comprising a first slide (32) slidably coupled to the supporting frame (4) to move, with regard to the supporting frame (4), in a first direction (8) substantially transversal to the first axis (3), a first shock-absorbing device interposed between the first slide (32) and the supporting frame (4) to control the movements of the first slide (32) in the first direction (8), a second slide (33) slidably coupled to the first slide (32) to move, with regard to the first slide (32), in a second direction (34) substantially orthogonal to the first axis (3) and to the first direction (8), and a second shock-absorbing device interposed between the first and the second slide (32, 33) to control the movements of the second slide (33) in the second direction (34); the screwing element (31) being supported by the second slide (33).

11. Aggregate according to any one of Claims 2-9, wherein the gripping element (40) is rotatably coupled to the supporting frame (37) to rotate, with regard to the supporting frame (37), around a third axis (42) substantially transversal to the first axis (3).

12. Aggregate according to Claim 11, wherein the gripping element (40) comprises two elastically deformable jaws (47) mobile between a locking position and a release position of an anuba hinge (48).

13. Aggregate according to any one of the preceding Claims, wherein the gripping element (10; 24; 40) and the screwing element (31) are mounted to rotate around respective second longitudinal axes (3; 44); a control device being provided to control an angular position of the gripping element (10; 24; 40) and of the screwing element (31) around the relative second axis (3; 44).
